# EUROPÄISCHE PATENTSCHRIFT

(11) **EP 3 091 092 B1**
(45) Veröffentlichungstag und Bekanntmachung des Hinweises auf die Patenterteilung: **15.08.2018**
(21) Anmeldenummer: 14877013.4
(22) Anmeldetag: 26.12.2014
(51) Int. Cl.: C21C 5/52, F27B 3/08, F27B 3/18

(54) **VERFAHREN ZUR HERSTELLUNG VON STAHL IN EINEN LICHTBOGENOFEN UND LICHTBOGENOFEN**
METHOD FOR MAKING STEEL IN AN ELECTRIC ARC FURNACE AND ELECTRIC ARC FURNACE
PROCÉDÉ D'ÉLABORATION D'ACIER DANS UN FOUR À ARC ÉLECTRIQUE ET FOUR À ARC ÉLECTRIQUE

(30) Priorität: 30.12.2013 RU 2013158488
(43) Veröffentlichungstag der Anmeldung: 09.11.2016
(73) Patentinhaber: Dorofeev, Genrikh Alekseevich, Tula 300001 (RU)
(72) Erfinder: YANTOVSKIY, Pavel Rudol'fovich, Moskovskaya obl. g. Khimki 141407 (RU); SMIRNOV, Konstantin Gennadievich, Moskovskaya obl. g. Khimki 141400 (RU); YASTREBOV, Igor' Ivanovich, Tula 300027 (RU); PROTOPOPOV, Aleksandr Anatol'evich, Tula 300026 (RU); ZINYAGIN, Gennadiy Alekseevich, Belgorodskaya obl. Staryi Oskol 309502 (RU)
(74) Vertreter: Jeck, Anton
(86) Internationale Anmeldenummer: PCT/RU2014/000996
(87) Internationale Veröffentlichungsnummer: WO 2015/102520

(56) Entgegenhaltungen:
- WO-A1-2013/098636
- RU-C1- 2 034 040
- RU-C1- 2 104 450
- SU-A1- 1 165 861
- US-B1- 6 635 096

## Beschreibung

Die Gruppe von Erfindungen bezieht sich auf den Eisenhüttenbetrieb und insbesondere auf ein Verfahren zur Stahlproduktion und eine Konstruktion des Elektrolichtbogenofens hierfür.

Aus dem Stand der Technik ist ein Verfahren zur Stahlerzeugung in einer Herd-Schmelzanlage, vorwiegend in einem elektrischen Lichtbogenofen, bekannt. Das Verfahren umfasst eine schichtweise Beschickung des Ofens mit Kalkstein und Verbundstoff, der Eisenoxid- und kohlenstoffhaltige Materialien enthält, eine schichtweise Beschickung des Einsatzguts und dessen Schmelzen. Dabei wird ein Anteil des kohlenstoffhaltigen Materials in Höhe von 10 - 20 % der Menge, die für die vollständige Reduktion der Eisenoxide benötigt wird, mit Kalkstein gemischt und chargiert. Der Rest wird mit Eisenoxidmaterial gemischt und ebenfalls chargiert. Dabei wird gasförmiges Kohlenstoffmonoxid nach dem Aufschmelzen von 1/3 - 1/2 der Gesamtmenge des Metalleinsatzguts über den Ofenherd zugeführt [Patentschrift RU 2285726 vom 02.03.2005, IPC C21C 5/52, veröffentlicht am 20.10.2006]. Dadurch wird ermöglicht, die thermische Leistung des Ofens, die Erhitzungs- und Schmelzprozesse des Einsatzguts sowie die Schlackenbildung schnell zu steuern. Das wird dank der folgenden Verfahrensschritte erreicht: Restzersetzung der Eisenoxide, die im Einsatzgut und in der Schlacke enthalten sind, Schlackenschäumung und Lichtbogenabschirmung, Nachbrennen des Kohlenstoffmonoxids in der Ofenatmosphäre und Durchmischung der Schmelze mit Schlackenbildnern. Im Ergebnis werden der Wärmewirkungsgrad der Elektrolichtbogenöfen und die Flüssigmetallausbeute erhöht und das Möllern der Schmelzen vereinfacht.

Das Verfahren dient als Alternative zu dem bewährten Verfahren der Stahlerzeugung unter Verwendung von synthetischen Verbundwerkstoffen. Die Erreichbarkeit des beanspruchten technischen Effekts ist zweifelhaft. Insbesondere ist CO ein schwaches Reduktionsmittel bei Herdöfen. Somit ist ein ziemlich hoher Verbrauch vorausgesetzt. Die zusätzliche Eisenoxidation infolge des Kontakts mit der oxidierenden Ofenatmosphäre verwandelt es in eine Oxidform. Somit wird die angegebene Verminderung des elektrischen Stromverbrauchs in dieser Erfindung nicht erreicht.

Die bekannten Stahlerzeugungsverfahren in einem Elektrolichtbogenofen schließen folgende Schritte ein: Ausflicken des Ofens, Beschickung des Einsatzguts in Form von Schrott, Elektrodennachsetzen und -wechsel, Zufuhr von elektrischem Strom, Brennstoff, gasförmigem Sauerstoff, Zuführung eines Aufkohlmittels und Pulvern, Verschmelzen des Metalleinsatzguts, Oxidationsphase, Erhitzung und Entkohlung des Metallbads, Abgießen des Metalls und Ablassen der Schlacke aus dem Ofen in die Pfanne [S. A. N..Morosov: "Moderne Stahlerzeugung in Lichtbogenöfen", 2. Auflage; Chelyabinsk: "Metallurgie", 1987, S. 41].

Eine der Abwandlungen des Verfahrens zur Stahlerzeugung im Elektrolichtbogenofen sieht die Verwendung von Oxid-Kohlenstoff-Material (OKM) als Bestandteil des Metalleinsatzguts neben Schrott und in Kombination damit vor, um Gusseisen, Bruchstahl und teilweise Aufkohlmittel zu ersetzen [S. Yu. A. Bondarev, G. N. Yelansky, V. P. Lemyakin und andere: "Erfahrung der Schmelzführung in elektrischen Öfen unter Anwendung von Oxid-Kohlenstoff-Briketts", Gesammelte Schriften des 5. Stahlschmelzerkongresses. M.: Chermetinfotmatsiya, 1999. S. 218-219, und E. A-gueyev, V. S. Antonov, V. K. Babich und andere: "Oxid-Kohlenstoff-Briketts: Anwendungspraktik in Lichtbogenöfen", Gesammelte Schriften des 6. Stahlschmelzerkongresses. M.: Chermetinfotmatsiya, 2001. S. 237-240].

Beim Oxid-Kohlenstoff-Material (OKM) handelt es sich um stückiggemachte (agglomerierte) oder kompaktierte Mischungen von kohlenstoffhaltigen Stoffen (Koks, Graphit, verschiedene Kohle, kohlenstoffhaltige Abfälle der Hütten-, chemischen und sonstigen Produktion) und festen Oxidationsmitteln (Konzentrat, Superkonzentrat, Eisenerzpulverteilchen, Sintergrusabsiebung und deren Mischungen), die durch Brikettieren, Stückigmachen und andere Kompaktierverfahren hergestellt werden.

Die Verwendung von OKM bei der Stahlerzeugung in einem Elektrolichtbogenofen hat mehrere Vorteile. Darunter seien vor allem Folgende erwähnt:
- vollständige Verwertung von Zunder, der während der Produktion anfällt;
- teilweiser Ersatz von Gusseisen und Schrott;
- niedrigerer Aufkohlmittelverbrauch;
- geringerer Phosphor-, Schwefel- und Buntmetallanteil;
- Stahlkostensenkung.

Somit umfasst das Verfahren zur Stahlerzeugung in einem Elektrolichtbogenofen das Ausflicken des Ofennutzraums, die Beschickung des Ofens mit dem Einsatzgut, das aus Schrott und dem stückiggemachten Oxid-Kohlenstoff-Material besteht, und ggf. die Nachbeschickung mit dem Einsatzgut, das Elektrodennachsetzen und den Elektrodenwechsel, die Zufuhr von elektrischem Strom, Brennstoff, Aufkohlmittel, Pulvern, gasförmigem Sauerstoff, das Schmelzen des Einsatzguts, die Metallerwärmung und die Entkohlung des Metallbads (sog. Oxidationsphase), das Abgießen des Stahls und das Ablassen der Schlacke aus dem Ofen. Dieses Verfahren zur Stahlerzeugung ist seinem technischen Wesen nach als nächstliegender Stand der Technik gegenüber dem beanspruchten Verfahren zu betrachten.

Die Hauptmängel dieses Verfahrens sind der erhöhte spezifische Stromverbrauch während der Schmelzphase und die niedrigere Eisenausbeute sowie die begrenzte Menge des zugeführten OKM, und zwar durchschnittlich max. 5 % der Gesamtmasse des für die Schmelze benutzten Metalleinsatzguts (Eisensatzes/Möllers). Das liegt daran, dass das OKM samt Schrott dem unteren Teil des Nutzraums des Elektrolichtbogenofens zugeführt wird.

Die Unterbringung der OKM-Stücke in der Nähe des Ofenherds unter einer dicken und von der Lichtbogenzone weit abstehenden Schicht des Metalleinsatzguts erschwert die Wärmeübertragung an die tieferen Schichten des Einsatzguts, in denen sich das OKM befindet. Dadurch wird das Aufschmelzen des OKM verlängert, und der Stromverbrauch wird erhöht.

Das heftige Schmelzen des OKM fängt an, nachdem das flüssige Metallbad im Ofenherd gebildet ist. Ein Teil des OKM schafft es nicht, rechtzeitig zu schmelzen, und erscheint auf der Oberfläche des Metallbads, wobei sich dieser Teil des OKM in der Schlacke auflöst. Dank dem erhöhten Eisenoxid-Anteil hat diese Schlacke oxidierende Eigenschaften und eine relativ niedrige Erhitzungstemperatur. Diese Einflussgrößen erschweren die Eisenreduktion mittels des im OKM enthaltenen Kohlenstoffs aus Eisenoxiden. Dadurch werden die Eisenausbringung aus dem OKM sowie die Gusseisenausbeute vermindert.

Diese Einflussgrößen steigern alles in allem den Stromverbrauch und vermindern die Eisenausbeute. Aus diesem Grund erfuhr das Verfahren zur Stahlerzeugung unter Verwendung des OKM in Elektrolichtbogenöfen keine nennenswerte weite Verbreitung. Gleichzeitig war dies der Grund für die schlagartige Begrenzung des Verbrauchs des OKM, das bei der Stahlerzeugung in Elektrolichtbogenöfen benutzt wird. Die durch die erste Erfindung der Gruppe von Erfindungen zu lösende Aufgabe und der erreichte technische Effekt sind die Verringerung des spezifischen elektrischen Stromverbrauchs beim Aufschmelzen des Metalleinsatzguts und die Steigerung der Eisenausbeute aus dem Oxid-Kohlenstoff-Material sowie die Erhöhung des relativen OKM-Anteils hinsichtlich des Mengenverhältnisses in der Gesamtmasse des Einsatzguts.

Um die gestellte Aufgabe zu lösen und den beanspruchten technischen Effekt zu erreichen, wird das Verfahren zur Stahlerzeugung gemäß unabhängigem Anspruch 1 in einem Elektrolichtbogenofen benutzt. Dieses Verfahren umfasst folgende Schritte: das Ausflicken des Ofennutzraums, die Begichtung mit Einsatzgut, das aus Schrott und stückiggemachtem Oxid-Kohlenstoff-Material besteht, und ggf. die Nachbeschickung mit Einsatzgut, das Nachsetzen und der Elektrodenwechsel, die Zufuhr von elektrischem Strom, Brennstoff, Aufkohlmittel, Pulvern, gasförmigem Sauerstoff, das Schmelzen des Einsatzguts, die Metallerwärmung und die Entkohlung des Metallbads, das Abgießen des Metalls und das Ablassen der Schlacke aus dem Ofen. Erfindungsgemäß wird ein Teil des Oxid-Kohlenstoff-Materials in einer Menge von 10 - 90 % der verbrauchten OKM-Gesamtmenge pro Schmelze einmalig samt Schrott mit dem ersten Satz des Metalleinsatzguts vor Schmelzbeginn eingebracht. Die Restmenge des Oxid-Kohlenstoff-Materials wird dem aufgeschmolzenen Einsatzgut mit einer spezifischen Beschickungsrate von 0,5 - 10 kg/Min. pro 1 MVA Transformatorleistung des Elektrolichtbogenofens im Verlauf des Stahlschmelzprozesses zugeführt. Dabei wird die Korngröße der Einzelstücke des Oxid-Kohlenstoff-Materials aus einem Bereich zwischen 5 und 80 mm gewählt.

Darüber hinaus:
- wird das Oxid-Kohlenstoff-Material in die Mittelzone des Ofens aufgegeben, die an die Lichtbogenzone angrenzt und auf das Höchstmaß D=(d_{Tk}+3,5 d_{El}) beschränkt ist, wobei d_{Tk} der Elektrodenteilkreisdurchmesser und d_{El} der Elektrodendurchmesser sind;
- wird das Verhältnis zwischen Kohlenstoff und Sauerstoff, der durch das feste Oxidationsmittel des Oxid-Kohlenstoff-Materials eingebracht und/oder in Eisenoxiden enthalten ist, aus einem Bereich von 0,15≤ C/O ≤5,00 bei folgenden Anteilen der Ausgangsstoffe gewählt (in Mass.-%):

| | |
|---|---|
| Festes Oxidationsmittel | 40 - 95; |
| Aufkohlmittel | 5 - 60; |
| Bindemittel | über 100% hinaus in der Menge von 1 - 10 % der Gesamtmasse des Aufkohlmittels und des festen Oxidationsmittels; |

- enthält das Oxid-Kohlenstoff-Material zusätzlich eisenhaltige Metallteilchen in einer Menge von 5 - 30 % der Gesamtmasse des Materials;
- enthält das Oxid-Kohlenstoff-Material zusätzlich Schlackenbildner in einer Menge von 0,1 - 10,0 % der Gesamtmasse des Materials. Als Schlackenbildner werden dabei Oxide und/oder Fluoride solcher Elemente benutzt, die eine höhere Affinität zu Sauerstoff bei einer Temperatur von über 1550° C haben als Eisen; es handelt sich also um folgende Elemente: Ca, Na, K, Ba, Al, Ti, Zr, Si, Mn, V, Cr und B.

Um das vorliegende Verfahren zur Stahlerzeugung auszuführen, ist ein entsprechendes Aggregat, und zwar ein Elektrolichtbogenofen gemäss unabhängigem Anspruch 5, erforderlich.

Ein typischer Elektrolichtbogenofen [S. Wikipedia, http://ru.wikipedia.org/wiki/, Begriff "Lichtbogenofen"] besteht aus einem Schmelzbad (Nutzraum), einem Bogenleistungsregler und verfahrenstechnischen Hilfsvorrichtungen, um den Ofendeckel zu öffnen (bzw. zu schließen), die Schlacke abzulassen und Metall abzugießen.

Der Schmelzprozess wird im Nutzraum durchgeführt, der oben mit einem kuppelförmigen Gewölbe, unten mit einem kugelförmigen Herd und seitlich mit Wandungen begrenzt ist. Eine feuerfeste Mauerung des Herds und der Wandungen ist von außen in einem Metallgefäß geschlossen. Das abnehmbare Gewölbe kann aus feuerfesten Futtersteinen ausgemauert sein, die sich auf einen Tragring stützen, oder es kann auch wie Wandungen aus wassergekühlten Platten gebaut sein. Die stromführenden Elektroden sind über drei symmetrisch liegende Löcher im Gewölbe des Nutzraums eingeführt. Diese Elektroden können sich mit Hilfe von speziellen Vorrichtungen auf und ab bewegen. Der Ofen wird normalerweise mit Dreiphasenwechselstrom betrieben; es gibt aber auch Öfen mit Gleichstromspeisung. Der moderne leistungsstarke Lichtbogenofen wird vorwiegend als Aggregat zum Aufschmelzen des Einsatzguts und zur Herstellung eines flüssigen Zwischenprodukts benutzt, das nachher nachbehandelt wird, um die benötigte Zusammensetzung und den Reinheitsgrad mittels Sekundärmetallurgieverfahren in einer Pfanne zu erreichen.

Nach der Revision des Elektrolichtbogenofens und der Reparatur von beschädigten Auskleidungsstellen (Ausflicken) fängt der Verhüttungsvorgang vor allem mit der Begichtung an. Bei modernen Öfen erfolgt die Zuführung des Einsatzguts von oben mit Hilfe eines Gichtkübels (Setzkübels, Körben). Nach Abschluss der Begichtung werden die Elektroden in den Ofen eingefahren und der Hochspannungsschalter eingeschaltet. Somit beginnt die Schmelzphase. Die abgegebene Leistung wird mittels Veränderung der Elektrodenstellung (Lichtbogenlänge) oder Elektrodenspannung geregelt. Nach dem Aufschmelzen entstehen eine Metallschicht und eine Schlackenschicht im Ofen. Die Schlacke wird mit Hilfe von kohlenstoffhaltigen Stoffen aufgeschäumt, um die Bögen abzudecken, die Abziehbarkeit der Schlacke zu verbessen und den Metallabbrand zu vermindern.

Dann wird die Schlacke aus dem Ofen abgelassen; der Flüssigstahl wird in einer Stahlpfanne über ein Abstichloch und eine Abstichrinne abgegossen, indem der Nutzraum geneigt wird (oder, wenn der Ofen mit einem Grundablass versehen ist, dann erfolgt dies darüber). Eine mit einem Schieber verschließbare Arbeitstür dient zur Überwachung des Schmelzprozesses (Metalltemperaturmessung, Flüssigstahl-Probenahme zur Metallanalyse). Die Arbeitstür kann auch benutzt werden, um Schlackenbildner zuzuführen und Zusatzstoffe (bei Kleinöfen) zuzugeben. Bei modernen Hochleistungsöfen werden Schlackenbildner während des Schmelzprozesses über eine separate Deckelöffnung mittels eines Transportbandsystems nachgeführt. Die kohlenstoffhaltigen Stoffe für die Schlackenschäumung werden entweder satzweise über den Deckel oder mittels Injektionsbrenner als Gasstrahlen zugegeben. Vor und im Zuge des Abstechens werden Legierungszusätze und Beruhigungsmittel und beim Abtrennen der Ofenschlacke auch noch Schlackenbildner der Stahlpfanne zugeführt.

Die bekannten Elektrolichtbogenöfen haben folgende Mängel: beachtliche lokale Überhitzung unterhalb der Elektroden; erschwerte Vermengung und Ausgleichung der chemischen Metallzusammensetzung; bedeutender Anfall an Verbrennungsprodukten und hohe Lärmemissionen während des Ofenbetriebs. Der Schlüsselindikator des nichteffektiven Ofenbetriebs ist jedoch seine übermäßig hohe lokale Energiedichte. Je leistungsstärker der Ofen ist, desto höher ist diese Energiedichte. Darüber hinaus sind die bestehenden Öfen dafür nicht ausgelegt, das Oxid-Kohlenstoff-Material dem Metallbad speziell, d. h. als Bestandteil des Schrotts getrennt von der Beschickung, nachzuführen.

Die durch die zweite Erfindung zu lösende Aufgabe und der erreichbare technische Effekt sind die Entwicklung einer Vorrichtung für die Ausführung des beanspruchten Verfahrens zur Stahlerzeugung. Folglich ist es die Aufgabe der Erfindung, den spezifischen elektrischen Stromverbrauch für das Verschmelzen des Metalleinsatzguts zu vermindern und die Eisenausbeute aus dem Oxid-Kohlenstoff-Material zu vergrößern sowie sein Mengenverhältnis in der Gesamtmasse des Einsatzguts zu erhöhen.

Um die gestellte Aufgabe zu lösen und den beanspruchten technischen Effekt zu erreichen, wird ein Elektrolichtbogenofen eingesetzt. Der Elektrolichtbogenofen enthält ein Ofengefäß mit hochfeuerfester Zustellung, das einen Herd und Wandungen sowie Öffnungen für Elektrodendurchfahrt und Zugabe von schüttbaren Stoffen aufweist, und einen ausgewölbten abnehmbaren Deckel mit Elektrodenarmen und einer Elektrodeneinheit. Erfindungsgemäß ist der Ofen derart ausgebildet, dass das Verfahren nach den Ansprüchen 1 bis 5 ausführbar ist. Dabei sind die Ofengefäßwandungen mit mindestens drei im Umfang beabstandeten Öffnungen versehen, um das Oxid-Kohlenstoff-Material in die Mittelzone des Ofens zu fördern. Diese Öffnungen liegen 0,2 - 1,0 m tiefer als die Höchststandmarke des Ofengefäßes. Die Öffnungen für die Zugabe von Oxid-Kohlenstoff-Material in die Mittelzone des Ofens sind zusätzlich im Umfang der Wandungen beabstandet, wobei diese Öffnungen jeweils vorteilhaft zwischen zwei jeweiligen Nachbarelektroden angeordnet sind.

Die Erfindungen werden anhand der Zeichnungen näher erläutert. Es zeigen:

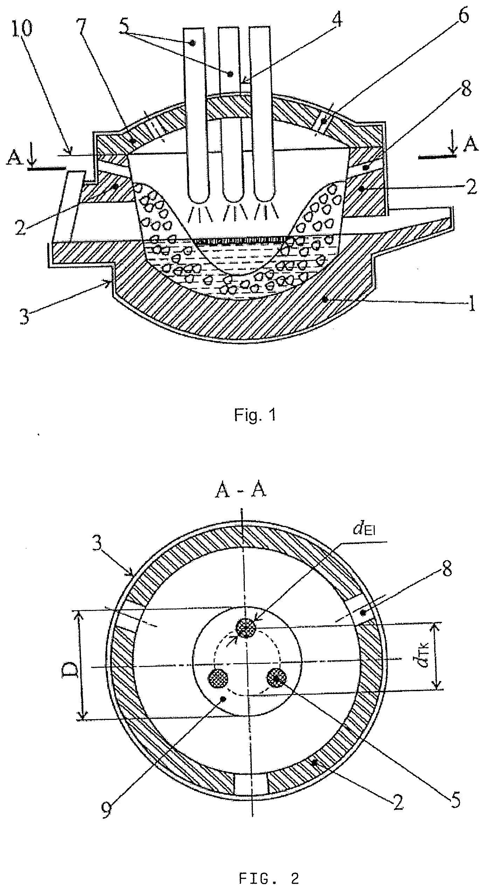

- Fig. 1: eine Gesamtansicht des Elektrolichtbogenofens für die Ausführung des Verfahrens zur Stahlerzeugung unter Verwendung des Oxid-Kohlenstoff-Materials,
- Fig. 2: einen Schnitt A-A aus Fig. 1: Vorteilhafte Positionierung der Öffnungen für die Zugabe von Oxid-Kohlenstoff-Material in die Mittelzone des Ofens in Bezug auf die Elektroden.

Somit wird das Verfahren zur Stahlerzeugung in einem Elektrolichtbogenofen, vorteilhaft in einem mit Dreiphasenwechselstrom betriebenen Elektrolichtbogenofen, durchgeführt und umfasst: das Ausflicken des Ofennutzraums, die Begichtung (bzw. Beschickung) mit Einsatzgut, das aus Schrott und stückiggemachtem Oxid-Kohlenstoff-Material besteht, ggf. eine oder mehrere Nachführungen des Einsatzguts, das Elektrodennachsetzen und den Elektrodenwechsel, die Zufuhr von (Versorgung mit) elektrischem Strom, Brennstoff, Aufkohlmittel, Pulvern, gasförmigem Sauerstoff, das Schmelzen des Einsatzguts, die Metallerhitzung und Entkohlung des Metallbads (sog. Oxidationsphase), das Abgießen des Metalls und das Ablassen der Schlacke aus dem Ofen. Dabei wird ein Teil des Oxid-Kohlenstoff-Materials in einer Menge von 10 - 90 % seiner verbrauchten Gesamtmenge pro Schmelze erfindungsgemäß samt Schrott einmalig mit dem ersten Satz des Metalleinsatzguts vor Schmelzbeginn beschickt. Die Restmenge des Oxid-Kohlenstoff-Materials wird dem aufgeschmolzenen Einsatzgut im Verlauf des Stahlschmelzprozesses mit einer spezifischen Beschickungsrate von 0,5 - 10 kg/Min. pro 1 MVA Transformatorleistung des Elektrolichtbogenofens zugeführt. Dabei wird die Korngröße der Einzelstücke des Oxid-Kohlenstoff-Materials aus einem Bereich zwischen 5 und 80 mm gewählt.

Das Oxid-Kohlenstoff-Material wird in die Mittelzone des Ofens eingebracht, die an die Lichtbogenzone angrenzt und auf das Höchstmaß D=(d_{Tk}+3,5 d_{El}) beschränkt ist, wobei d_{Tk} der Elektrodenteilkreisdurchmesser und d_{El} der Elektrodendurchmesser sind.

Mit anderen Worten handelt es sich bei der Mittelzone des Ofens um einen um die Elektroden gezogenen Kreis mit dem Durchmesser D. Diese Zone nimmt in der Regel max. 30 % der Querschnittsfläche des Ofennutzraums ein.

Das Verhältnis zwischen Kohlenstoff und Sauerstoff, der durch das feste Oxidationsmittel des Oxid-Kohlenstoff-Materials eingebracht wird und/oder in Eisenoxiden enthalten ist, wird aus einem Bereich von 0,15≤ C/O ≤5,00 bei folgenden Anteilen der Ausgangsstoffe gewählt, (in Mass.-%):

| | |
|---|---|
| Festes Oxidationsmittel | 40 - 95; |
| Aufkohlmittel | 5 - 60; |
| Bindemittel | über 100 % hinaus in einer Menge von 1 - 10 % der Gesamtmasse des Aufkohlmittels und des festen Oxidationsmittels. |

Das heißt, die jeweilige Zusammensetzung des OKM und dessen Verbrauch pro Schmelze werden je nach der zu erzeugenden Stahlsorte festgelegt. Das ist nun dank der zahlreichen Versuche möglich geworden, die einen Überblick über die Optimierung des OKM-Einsatzes bei Hüttenprozessen während der Stahlerzeugung nach dem Lichtbogenschmelzverfahren schufen. Es gelang, auf dieser Grundlage eine entsprechende wissenschaftliche Basis zu erstellen.

Als festes Oxidationsmittel werden Eisenerzkonzentrat, Zunder, Eisenerz, Agglomerat, teilweise nach dem Direktreduktionsverfahren reduziertes Eisen und/oder ihre Mischungen angewendet. Als kohlenstoffhaltiges Reagens oder Aufkohlmittel werden Koks, Graphit, Holzkohle, Kohleteilchen, Thermoanthrazit und ihre Mischungen verwendet. Als Bindemittel können flüssiges Wasserglas, verschiedene Zementsorten, Melasse, Holzkleber, Bentonit und ihre Mischungen sowie biologische Stoffe (Mehl u. a. m.) eingesetzt werden.

Das Oxid-Kohlenstoff-Material kann eisenhaltige Metallteilchen in einer Menge von 5 - 30 % der Gesamtmasse des Materials enthalten. Die Metallteilchen wirken als Katalysator für die Eisenreduktion aus Eisenoxiden unter Einsatz von Kohlenstoff als Bestandteil des Aufkohlmittels.

Das Oxid-Kohlenstoff-Material kann auch zusätzlich Schlackenbildner in einer Menge zwischen 0,1 und 10,0 % der Gesamtmasse des Materials enthalten. Als Schlackenbildner werden dabei Oxide und/oder Fluoride solcher Elemente benutzt, die eine höhere Affinität zu Sauerstoff bei einer Temperatur von über 1550° C (diese Temperatur entspricht der Aufschmelztemperatur des Einsatzguts) haben als Eisen, und zwar: Ca, Na, K, Ba, Al, Ti, Zr, Si, Mn, V, Cr und B.

Der Elektrolichtbogenofen für die Durchführung des vorliegenden Verfahrens zur Stahlerzeugung enthält ein Ofengefäß 3 mit Öffnungen 4 für eine Elektrodendurchfahrt 5 und einer Öffnung 6 für die Zugabe von schüttbaren Stoffen (die am Verfahren der Stahlerzeugung beteiligt sind) und einen ausgewölbten abnehmbaren Deckel 7. Das Ofengefäß 3 ist mit einer hochfeuerfesten Zustellung derart ausgemauert, dass ein Herd (Ofenherd) 1 und Wandungen 2 des Ofengefäßes 3 gebildet sind. Der abnehmbare Deckel 7 ist mit Elektrodenarmen (nicht abgebildet) und mit einer Elektrodeneinheit versehen. Die Elektrodeneinheit besteht aus drei Elektroden 5. Dabei sind wenigstens drei im Umfang beabstandete Öffnungen 8 in den Wandungen 2 des Ofengefäßes 3 ausgebildet, um das Oxid-Kohlenstoff-Material in die Mittelzone 9 des Ofens einzubringen. Die Öffnungen 8 liegen dabei 0,2 bis 1,0 m tiefer als die Höchststandmarke 10 des Ofengefäßes 3. Es empfiehlt sich, die Öffnungen 8 am Umfang der Wandungen 2 derart auseinanderzusetzen, dass diese Öffnungen vorteilhaft jeweils zwischen zwei jeweiligen Nachbarelektroden 5 angeordnet sind (bzw. dass ihre Ausrichtung der Position zwischen zwei Nachbarelektroden 5 entspricht). Diese Lösung ist vorgesehen, um zu vermeiden, dass eingebrachte Oxid-Kohlenstoff-Material-Briketts die Elektroden 5 "bombardieren", denn unter Umständen können die Briketts die Elektroden beschädigen. Darüber hinaus muss vermieden werden, dass der Ofen mit OKM außerhalb der Mittelzone 9 beschickt wird, die sich auf einen Bereich mit dem Durchmesser D beschränkt. Sonst wird zusätzliche Energie benötigt, um dieses OKM aufzuschmelzen. Das führt zur Überhitzung des Bereichs, der unmittelbar an die Elektroden 5 angrenzt.

### Analyse der wesentlichen kennzeichnenden Merkmale der Erfindungen.

Die Mittelzone 9 im Elektrolichtbogenofen unterscheidet sich von den übrigen Bereichen des Nutzraums durch eine gewaltige Menge der abgegebenen Wärmeenergie, ihre maximale Energiedichte sowie durch ein sehr hohes Temperaturniveau. Bei den letzten Generationen der modernen Öfen erreicht die Energiedichte ca. 10 MVA/m³. Das Temperaturniveau macht ca. 4 000 - 15 000° K aus und überschreitet somit wesentlich die Schmelztemperatur des Ausgangseinsatzguts und die des Endprodukt-Flüssigmetalls (max. 1 700° C). Aus diesen Gründen unterscheiden sich grundsätzlich die Schmelzverläufe aller beschickten Materialien einschließlich der OKM-Stücke in der Lichtbogenzone 5 und in den Zonen, die außerhalb der Lichtbogenzone 5 und in den Randgebieten des Ofens liegen.

Im ersten Fall verläuft das Schmelzen unter Energieüberschuss und bei sehr hohen Temperaturen, die die Schmelztemperatur der Ausgangsstoffe und die des Endprodukt-Flüssigstahls wesentlich überschreiten. Einige der Folgen sind dabei die unvollständige Wärmeaufnahme der eingeleiteten Energie, beachtliche Wärmeverluste und der überflüssige Stromverbrauch.

Beim zweiten Fall erfolgt der Übergang der festen Einsatzgutkomponenten in den flüssigen Zustand und die Bildung von Flüssigmetall und Schlacke unter Bedingungen des Wärmemangels ("Wärmehungers") und bei Betriebstemperaturen, die die Abstichtemperatur von Metall und Schlacke (1700° C) nicht übersteigen.

Im Unterschied zum Stand der Technik beruht das vorgeschlagene Verfahren darauf, dass ein in der Regel wesentlich geringerer Teil des OKM samt Schrott noch vor Schmelzbeginn in die Begichtung eingeführt wird. Der Rest des OKM wird während des Schmelzvorgangs in die Lichtbogenzone eingebracht, wenn der Ofen die größte Menge von Strom aufnimmt. Die eingeführten Materialien erhöhen wesentlich das Stromaufnahmevermögen des Einsatzguts und vermindern somit die Wärmeverluste sowie den Stromverbrauch.

Der besondere Energieverlauf (Energietechnik) der Mittelzone des Ofens in Kombination mit der veränderten Beschickungsvorgehensweise bestimmt das äußerst schnelle Aufschmelzen der festen OKM-Stücke und ihre Verwandlung in die Flüssigphase vor. Dadurch reagieren die Eisenoxide des festen Oxidationsmittels als Hauptbestandteile des OKM und des Kohlenstoffs als Bestandteil des Aufkohlmittels mit einer sehr hohen spezifischen Geschwindigkeit von ca. 5 - 40 kg/(sek.m³). Die Folgeprodukte dieser Oxidations- (Kohlenstoff) und Reduktionsreaktion (Eisen) sind metallisches Eisen und Kohlenstoffmonoxid.

Das metallische Eisen läuft dann in das Metallbad ab und vergrößert somit den Eisenzulauf. Dabei handelt es sich um das sog. Primäreisen ohne jegliche Beimischungen. Das Kohlenstoffmonoxid dient als Quelle der zusätzlichen Wärme für den Ofen dank dem Nachbrennen von CO zu CO₂, wodurch der spezifische elektrische Stromverbrauch beim Aufschmelzen des Metalleinsatzguts reduziert wird.

Die Erhitzung und das Aufschmelzen des OKM erfolgen dabei dank der zusätzlichen Speicherung eines Wärmeanteils, der durch das Einsatzgut aufgrund seines begrenzten Energieaufnahmevermögens nicht verwertet wird und im Grunde genommen Wärmeverluste darstellt. Dieser Umstand führt zur Verringerung des spezifischen elektrischen Stromverbrauchs beim Aufschmelzen des Einsatzguts.

Das vorgeschlagene Verfahren erlaubt es auch, eine schnelle und vollständige Eisenreduktion dank der Wechselwirkung zwischen Eisenoxiden und Kohlenstoff im OKM zu erreichen und die Eisenausbringung sowie die Ausbeute von Guteisen zu steigern.

Das Schmelzen von OKM wird in diesem Fall davon begleitet, dass eine flüssige Schlackenphase entsteht. Das verbessert die Lichtbogenverhältnisse und die Stabilität der Energiespeisung im Ofen. Die Folge ist eine zusätzliche Energieeinsparung aufgrund der niedrigeren Energieverluste beim Brennen der Bögen.

Die bestehenden Elektrolichtbogenöfen haben eine sog. "fünfte" Öffnung 6 im Ofendeckel. Sie dient der Zugabe von schüttbaren Stoffen während des Schmelzprozesses. Die Umstellung auf die Beschickung im Zuge des Schmelzprozesses setzt Änderungen in der vorliegenden Konstruktion des Elektrolichtbogenofens voraus, um die ununterbrochene und gleichmäßige Materialförderung einschließlich des OKM während des Schmelzbetriebs möglich zu machen. Zu diesem Zweck wird vorgeschlagen, das OKM über drei oder mehr Öffnungen 8 in den Wandungen 2 einzubringen, indem diese Öffnungen 8 im oberen Teil des Ofengefäßes 3, und zwar 0,2 - 1,0 m unterhalb der Höchstmarke 10, angeordnet werden. Das ermöglicht es, das OKM ab Schmelzbeginn bei einer beliebigen Schüttdichte von Schrott einzubringen und auch den OKM-Verbrauch in einem größeren Bereich und gleitender zu regeln.

Die Hauptbesonderheit der Schmelzphase im Elektrolichtbogenofen ist die maximale Menge der eingeleiteten elektrischen Energie, um das Einsatzgut möglichst schnell aufzuschmelzen und die Dauer dieser Phase zu verkürzen, denn darauf entfällt der größte Teil des elektrothermischen Schmelzens. Die Elektrolichtbogenöfen, besonders die der letzten Generation, weisen eine hohe spezifische Transformatorleistung bis zu 1 500 kVA pro Tonne Stahl auf. Folglich wird dem Einsatzgut eine beachtliche Menge an hochkonzentrierter elektrischer Energie zugeführt. Sie überschreitet wesentlich das Wärmespeicher- und Aufnahmevermögen des festen Einsatzguts. Aufgrund des begrenzten Aufnahmevermögens des Einsatzguts hinsichtlich der zugeführten Energie wird ein wesentlicher Teil davon irrational verwendet und für die teilweise Metallverdampfung, Überhitzung des Einsatzguts, Metall und Gase sowie für die verstärkte Wärmebestrahlung des Deckels 7 und der Wandungen 2 des Ofens usw. verbraucht. Diese Einflussgrößen erhöhen die Wärmeverluste und den Stromverbrauch und vermindern den thermischen Wirkungsgrad des Elektrolichtbogenofens während des Schmelzbetriebs.

Das im Zuge des Schmelzbetriebs in das Einsatzgut eingebrachte Oxid-Kohlenstoff-Material füllt die Lücken (Hohlräume) in der Schicht des schmelzenden Einsatzguts aus und steigert somit seine Schüttdichte. Da die Korngröße des OKM relativ klein ist, weist dieses Material eine größere Wärmetauschfläche im Vergleich zu großen Stücken des Metalleinsatzguts auf. Darüber hinaus gehören die OKM-Briketts im Gegensatz zu Schrott zu schlanken Körpern und haben somit eine höhere Erhitzungsrate und dementsprechend eine kürzere Schmelzdauer. Aufgrund dieser Einflussgrößen vergrößert das Oxid-Kohlenstoff-Material das Speichervermögen des Einsatzguts und seine Aufschmelzgeschwindigkeit. Somit wird auch der Aufnahmegrad der während des Brennens der Bögen freigesetzten Energie erhöht und die entsprechenden Energieverluste vermindert. Dementsprechend werden auch der spezifische elektrische Stromverbrauch niedriger und die Schmelzdauer kürzer.

Somit beeinflusst das OKM den Wärmeaustausch in der Lichtbogenzone, indem die Aufnahme der Lichtbogenwärme erhöht wird. Daneben hat das Oxid-Kohlenstoff-Material eine zusätzliche Kühlwirkung. Diese beruht auf der chemischen Reaktion zwischen Kohlenstoff und Eisenoxiden im OKM. Das ist eine endothermische Reaktion, die von ihrer Natur her zusätzlich die diese Stoffe enthaltende Zone abkühlt. Somit wird die Aufnahmegeschwindigkeit der in diese Zone eingeleiteten Wärme erhöht. Folglich führen die Verwendung des OKM nach dem Lichtbogenschmelzverfahren und ihre Einbringung in die Mittelzone 9 des Ofens dazu, dass ein Teil der Wärme für die Reaktion zwischen Kohlenstoff und Eisenoxiden abgeleitet wird. Somit werden die Totalwärmeverluste reduziert und der spezifische elektrische Stromverbrauch vermindert. Der beschriebene Effekt bezieht sich auf die chemische Abkühlung der Lichtbogenzone und ergänzt den rein physischen Einfluss des OKM auf die Temperaturbedingungen in dieser Zone, indem die Kühlwirkung verstärkt wird.

Die endothermische Reaktion bezieht sich auf die Eisenreduktion aus Eisenoxiden mit Kohlenstoff und wird von einem beachtlichen Wärmeaufwand begleitet. Das beanspruchte Verfahren deckt aber diesen Wärmeaufwand durch die Wärme ab, die der aus dem Ofen abgehenden und als Verlust betrachteten Energie entnommen wird. Dadurch wird der zusätzliche Wärmeaufwand bei der Anwendung des OKM vermieden.

Die Folgeprodukte der Wechselwirkung zwischen Kohlenstoff und Eisenoxiden in dem während des Schmelzbetriebs eingebrachten OKM sind Eisen und Eisenmonoxid. Das aus dem OKM gewonnene Eisen geht in das Metallbad und vergrößert somit die Eisenausbeute. Dabei handelt es sich um primäres Eisen, das sich durch eine erhöhte Reinheit hinsichtlich der Restelemente wie Cu, Sn, Mo, Cr, Ni usw. auszeichnet. Die besonders hohen Temperaturen im Mittelbereich des Ofens, die vergrößerte Wärmetauschfläche der OKM-Stücke (Briketts), das Vorhandensein einer riesigen Reaktionsfläche beim Kontakt zwischen dem Aufkohlmittel und dem festen Oxidationsmittel sowie die hochintensive Wärmeübertragung stellen die benötigten und ausreichenden Bedingungen für diese Reaktion und darunter die vollständige Eisenreduktion sicher.

Das entstehende Kohlenstoffmonoxid dient als Quelle der zusätzlichen Wärme, die sich im Körper des stückigen Einsatzguts freisetzt. Das Kohlenstoffmonoxid wird durch die Schicht des schmelzenden stückigen Einsatzguts gefiltert und dann zu CO₂ nachgebrannt, wobei 6,55 kWtSt Wärme pro Kilo des im OKM enthaltenen Kohlenstoffs freigesetzt wird. Das Vorhandensein von festem Einsatzgut, seine vergrößerte Oberfläche, die relativ niedrigen Temperaturen sowie die Überlagerung der CO-Bildungszone, der CO-Nachbrennzone und der Wärmeaufnahmezone schaffen die Bedingungen für das vollständigere Nachbrennen von CO zu CO₂ in der Einsatzgutmasse und für die verstärkte Wärmeübertragung an die umgebenden Stoffe während des Nachbrennens. Diese Merkmale überschreiten wesentlich die jeweiligen Eigenschaften der bekannten Verfahren, bei denen das Nachbrennen und die Wärmeübertragung vorteilhaft am Ende des Schmelzbetriebs erfolgen, wenn das Metallbad festflüssig und mit einer Schicht der aufgeschäumten Schlacke bedeckt ist. Diese Umstände beeinträchtigen wesentlich die Bedingungen für das Nachbrennen und die Wärmeverwertung.

Aus den obigen Ausführungen folgt, dass die Verwendung des OKM während des Schmelzbetriebs und die Einbringung des OKM in den Ofen im Zuge des Schmelzprozesses das Verhalten dieser Stoffe und den Energieverlauf im Elektrolichtbogenofen im Allgemeinen grundsätzlich verändern. Die Zugabe von OKM in die Hochtemperaturzone und ihre nachfolgende Erhitzung lösen die Reaktion von Eisenreduktion aus Eisenoxiden in den Materialstücken unter Einfluss des eigenen im OKM enthaltenen Kohlenstoffs aus, was zur Vergrößerung der Eisenausbeute führt. Dadurch wird eine physikalische und chemische Abkühlung der Brennzone erreicht. Das erhöht den Wärmeaufnahmegrad wesentlich und schließt Wärmeverluste aus. Während der Filtration durch den Einsatzgutkörper brennt das Kohlenstoffmonoxid nach, wodurch CO₂ entsteht. Dadurch wird erreicht, dass die Zonen der CO-Bildung, des CO-Nachbrennens (zu CO₂) und der Wärmeaufnahme überlagert werden. Das erhöht wesentlich die Wirksamkeit des Nachbrennens und des Kohlenstoffs als Energieträger insgesamt. Folglich wird der Stromverbrauch reduziert, und die Schmelzdauer wird verkürzt.

Das ist einer der Vorteile des vorgeschlagenen Verfahrens gegenüber dem Stand der Technik, bei dem das aktive Aufschmelzen des OKM erst in der Abschlussphase des Schmelzvorgangs beginnt. Zu diesem Zeitpunkt bildet sich ein fest-flüssiges Metallbad im Ofen, das mit einer relativ kalten aufgeschäumten Schlacke bedeckt ist. Daher verlaufen das Nachbrennen von CO zu CO₂ und die Wärmeübertragung in das Ofenbad unter ungünstigen Bedingungen. Folglich ist der resultierende Effekt des Kohlenstoffeinsatzes beachtlich niedriger und beträgt max. zwischen 3,1 und 3,8 kWtSt/kg Kohlenstoff im Vergleich zu 4,5 - 4,9 kWtSt/kg nach dem vorgeschlagenen Verfahren.

Somit verändert das beanspruchte Verfahren zur Stahlerzeugung aufgrund der Anwendung eines besonderen Systems der OKM-Beschickung den Energieverlauf in der Schmelzphase wesentlich und trägt auf diese Weise zu einem beachtlich niedrigeren Stromverbrauch bei.

Der 10- bis 90 %ige Anteil ist durch den weiten Änderungsbereich der Transformatornennleistung des Ofens und der Kühlwirkung der OKM-Stücke mit verschiedenen Zusammensetzungen bedingt. Je nach Verhältnis zwischen diesen beiden Parametern kann der Anteil des während des Schmelzbetriebs eingebrachten OKM innerhalb von 10 - 90 % seines Gesamtverbrauchs pro Schmelze variieren. Liegt dieser Anteil unter 10 %, so lässt der erreichbare Effekt nach, so dass die Kennzahlen des vorgeschlagenen Verfahrens auch kleiner werden. Liegt der Anteil des OKM während des Schmelzbetriebs höher als 90 %, so geht die Wirksamkeit des vorgeschlagenen Verfahrens auch zurück. Das ist dadurch bedingt, dass die Menge des in diesem Fall samt Schrott eingeführten OKM eine Abgabe der benötigten Kohlenstoffmonoxidmenge nicht sicherstellt. Folglich wird das Metallbad weniger intensiv vermengt, und die Schmelzdauer wird verlängert. Darüber hinaus vermindert die begrenzte Menge des anfallenden Monoxids die Wärme, die in die schmelzenden Stoffe und in das fest-flüssige Metallbad eingeleitet wird. Beide Einflussgrößen gemeinsam führen dazu, dass der Stromverbrauch im Zusammenhang mit dem Aufschmelzen des Einsatzguts zunimmt. Daher stellt der angegebene Anteilsbereich zwischen 10 % und 90 % des OKM während des Schmelzbetriebs sicher, dass der maximale spezifische Wärmeaufwand für das Aufschmelzen des Einsatzguts erreicht wird.

Bei der typischen Korngröße zwischen 5 und 80 mm der Einzelstücke des OKM handelt es sich um einen Mittelwert von drei Hauptmaßen des Einzelstücks. Dieser Größenbereich wurde so gewählt, dass diese Einzelstücke in die Lücken (Hohlräume) im Schrott hineinpassen können und dass die OKM-Einbringung über die Öffnung in der Wandung 2 des Ofengefäßes 3 ermöglicht ist. Liegt die Korngröße unter 5 mm, so kann das OKM durch die großen Schrott-Stücke in den unteren Teil des Eisensatzes durchfallen und außerhalb der Schmelzzone bleiben. Folglich sammelt sich das OKM in den Einsatzgutschichten, die an den Ofenherd 1 angrenzen, ihr Aufschmelzen wird langsamer und gegen das Ende der Schmelzzeit des Einsatzguts verschoben. Folglich ist die Verkleinerung der OKM-Stücke unterhalb von 5 mm unerwünscht. Liegt die OKM-Korngröße über 80 mm, so nimmt ihre Neigung zu einer Gewölbebildung zu, und die Einbringung in den Ofen wird erschwert. Daher ist auch eine weitere Vergrößerung nicht sinnvoll.

Im Großen und Ganzen sorgt die Kombination der oben genannten Merkmale, und zwar die Einbringung eines 10- bis 90%igen Anteils des OKM während des Schmelzbetriebs und die Korngröße des OKM zwischen 5 und 80mm, dafür, dass diese Stoffe am Anfang des Schmelzprozesses und dabei mit einer sehr hohen Geschwindigkeit durchgeschmolzen werden, und zwar dank der Wärme, die ansonsten dadurch verloren geht, dass das Einsatzgut die gesamte eingeleitete Wärme der Elektrobögen nicht aufnehmen kann. Dabei wird eine so gut wie vollständige Eisenreduktion erreicht, wobei das gesamte in den Oxiden des festen Oxidationsmittels enthaltene Eisen wirksam reduziert wird. Folglich steigt auch die Eisenausbeute.

Eine wichtige Rolle spielt auch die frühere Bildung von Kohlenstoffmonoxid ab Schmelzbeginn, das neben Eisen auch ein Folgeprodukt der Reaktion zwischen Kohlenstoff und Sauerstoff ist, der in den Eisenoxiden des festen Oxidationsmittels enthalten ist. Die dabei anfallende beachtliche Kohlenstoffmonoxidmenge bis zu 600 m³ pro Tonne Material wirkt sich positiv aus. Das Monoxid fungiert als zusätzlicher Energieträger, denn bei seinem Nachbrennen zu CO₂ wird eine riesige Energiemenge von 6,55 kWtSt pro Kilo Kohlenstoff freigesetzt. Das Vorhandensein von festen Einsatzgutstücken verbessert die Bedingungen der Nachbrennwärmeaufnahme im Vergleich zu bekannten Verfahren: 60 - 80 % gegen 30 - 50 %. Somit entsteht eine zusätzliche Möglichkeit, elektrischen Strom zu sparen.

Der Eintritt von Monoxid in die Ofenatmosphäre reduziert den Sauerstoffanteil und das Oxidationspotential der Gasphase insgesamt in Bezug auf die vorliegende Schrottoberfläche. Somit wird die Eisenoxidation beim Schrotteisen zusätzlich vermindert, und die Eisenausbeute aus dem Metalleinsatzgut wird erhöht.

Erfindungsgemäß wird das OKM in die Ofenmittelzone 9 eingebracht, deren Abmessungen max. D=(d_{Tk}+3,5 d_{El}) betragen. Die Fläche dieser Zone beträgt max. 30 % der Gesamtquerschnittsfläche des Ofens in der Deckelhöhe.

Die Auswahl dieses Parameters ist durch den besonderen Energieverlauf des Elektrolichtbogenofens bedingt. Er besteht darin, dass die gesamte Stromumwandlung in die Wärme sowie die Wärmeabgabe in der Ofenmittelzone 9 erfolgt, deren Abmessungen mit dem Elektrodenteilkreisdurchmesser d_{Tk} der Elektroden 5 vergleichbar sind. Der Absolutwert dieses Parameters bei hochleistungsstarken modernen Öfen der letzten Generation beträgt 1,3 bis 1,6 m. Das Vorhandensein einer hochkonzentrierten Wärmequelle, die sich im Mittelpunkt des Ofens befindet, bestimmt das vorteilhafte Aufschmelzen der festen Stoffe des Eisensatzes in der Lichtbogenzone vor. Die Randgebiete des Einsatzguts schmelzen viel später auf, und zwar nachdem die sog. "Brunnen" ("Schächte") durchgeschmolzen sind und eine einheitliche Schmelzzone gebildet ist. Aufgrund der besonders hohen Energiedichte in der Lichtbogenzone und in den daran angrenzenden Bereichen muss das OKM genau in die Ofenmittelzone 9 eingebracht werden, die unterhalb der Elektroden 5 und seitlich davon liegt.

Liegt die Größe der Zugabezone unter D=(d_{Tk}+3,5 d_{El}), so kommt das zugegebene OKM in den Bereich, in dem die höchsten Temperaturen und die maximale Energiedichte herrschen. Somit werden die frühere Durchschmelzung des OKM und der schnellere Abschluss der Reaktion zwischen Kohlenstoff und den Eisenoxiden des festen Oxidationsmittels erreicht. Die Zielprodukte dieser Reaktion sind Eisen, das mittels Kohlenstoffs aus Eisenoxiden reduziert ist, und Kohlenstoffmonoxid. Das Kohlenstoffmonoxid dient als Quelle der zusätzlichen Wärme in Form von Nachbrennenergie. Es ist auch die Einflussgröße, die das Oxidationspotential der Gasphase des Elektroofens vermindert und somit die Eisenausbeute aus dem Einsatzgut erhöht.

Der empfohlene Bereich der spezifischen OKM-Einbringungsrate im Ofen beträgt 0,5 bis 10,0 kg/Min. pro 1 MVA Transformatorleistung. Bei einer Geschwindigkeit unter 0,5 kg/Min. pro 1 MVA lässt der erreichbare Effekt hinsichtlich der Verminderung des Stromaufwands und der Erhöhung der Eisenausbeute wesentlich nach. Folglich ist eine weitere Verringerung dieses Kennwerts unzweckmäßig. Bei einer OKM-Einbringungsrate über 10 kg/Min. pro 1 MVA wird eine überflüssige Abkühlung der Lichtbogenzone und der daran angrenzenden Bereiche beobachtet. Das verursacht die Verlangsamung des Schmelzprozesses und die Steigerung des Stromaufwands. Darüber hinaus entsteht dabei das Risiko, dass die Hauptreaktion des OKM zwischen Kohlenstoff und Eisenoxiden unvollständig verläuft. Diese Reaktion legt aber die Wirksamkeit der Anwendung dieser Stoffe fest. Aus diesem Grund ist der anwendbare Bereich der Zugabegeschwindigkeiten zwischen 0,5 und 10,0 kg/Min. pro 1 MVA am besten geeignet.

Das übergeordnete Merkmal des OKM ist das Kohlenstoff-Sauerstoff-Verhältnis (C/O). Es verallgemeinert den gemeinsamen Einfluss auf die Wirksamkeit der Anwendung dieses Verbundwerkstoffs (OKM) und die Auswahl seiner Zusammensetzung. Das Verhältnis zwischen Kohlenstoff und Sauerstoff beim OKM wird aus einem Bereich von 0,15≤ C/O ≤5,00 gewählt. Wird das C/O-Verhältnis beim OKM unter 0,15 aufrechterhalten, so geht die Kühlwirkung dieses Materials dem Maximalwert entgegen, der mit dem Kühlvermögen des festen Oxidationsmittels zusammenfällt. Eine der Folgen ist es hier, dass die OKM-Menge pro Schmelze reduziert werden muss. Das vermindert die Wirksamkeit des vorgeschlagenen Verfahrens. Daher ist das C/O-Verhältnis unterhalb von 0,15 unerwünscht.

Liegt das C/O-Verhältnis beim OKM höher als 5,00, so nimmt das Kühlvermögen des Materials beachtlich ab. Der Grund dafür ist der hohe Kohlenstoff-Anteil, der vom OKM in das Metallbad kommt und eine überflüssige Aufkohlung des Metalls verursacht. Folglich ist auch das höhere als 5,00-C/O-Verhältnis nicht sinnvoll. Somit sind die C/O-Verhältnisse niedriger als 0,15 und höher als 5 unerwünscht.

Die Grenzwerte für OKM-Komponenten und die Zusammensetzung dieses Materials werden durch folgende Überlegungen bestimmt. Liegt der Anteil des festen Oxidationsmittels unter 40 % und der Anteil des Aufkohlmittels dementsprechend über 60 %, so wird der gesamte Sauerstoff aus den Eisenoxiden des festen Oxidationsmittels völlig verbraucht, um einen Teil des Kohlenstoffs zu oxidieren. Die dabei ziemlich hohe Restmenge des Kohlenstoffs wird in das Metallbad eingebracht und reichert es mit Kohlenstoff an. Die in das Metallbad eintretende Menge an Kohlenstoff ist sehr hoch. Die Steigerung des Kohlenstoff-Anteils vermindert die Kühlwirkung des OKM auf die Lichtbogenzone und verlangt auch einen zusätzlichen Sauerstoff- und Stromverbrauch, wobei die Dauer der Oxidationsphase und die gesamte Schmelzdauer verlangsamt werden. Gleichzeitig damit verschlechtern sich die Bedingungen für die Entphosphorisierung des Metalls aufgrund der niedrigeren Eisenoxidmenge in der Schlacke. Folglich sind die Anteile an festen Oxidationsmitteln unter 40 % und an kohlenstoffhaltigen Reagens über 60 % unzweckmäßig. Bei einem erhöhten festen Oxidationsmittel-Anteil im OKM (über 95 %) und dementsprechend bei einem niedrigeren Aufkohlmittel-Anteil (unter 5 %) überschreitet die Menge der als Sauerstoffspender wirkenden Eisenoxide wesentlich die Menge, die für die Entfernung des gesamten Kohlenstoffs im OKM nötig ist. Der überflüssig hohe Anteil des festen Oxidationsmittels und dementsprechend der niedrigere Anteil des Aufkohlmittels erhöhen die Kühlwirkung des OKM, die fast mit der des reinen festen Oxidationsmittels vergleichbar ist und 3 bis 4 Punkte des Kühlvermögens des Schrottes beträgt. Das begrenzt den OKM-Verbrauch pro Schmelze beachtlich. Der dabei entstehende Überschuss an Eisenoxiden kommt in die Schlacke und vergrößert dabei ihren Oxidationsgrad und die Schlackenmasse. Diese Einflussgrößen beeinträchtigen die Kenngrößen (Eigenschaften) der elektrischen Verhüttung, vermindern die Eisenausbeute, erhöhen den Sauerstoffgehalt im Endmetall, steigern den Beruhigungsmittelverbrauch, verstärken somit die Verunreinigung des Stahls durch Oxideinschlüsse und verschlechtern die Standzeit der Ofenzustellung. Aus diesen Gründen sollen die Grenzwerte für Oxidationsmittel und Aufkohlmittel im OKM jeweils 90 % und 5 % nicht über-/unterschreiten. Das Bindemittel als Bestandteil des OKM in einer Menge zwischen 1 und 10 % über 100 % der Gesamtmasse des Aufkohlmittels und des festen Oxidationsmittels hinaus sorgt für die ordnungsgemäße mechanische Festigkeit der Briketts und hat keinen wesentlichen Einfluss auf den Schmelzprozess.

Das Oxid-Kohlenstoff-Material kann eisenhaltige Metallteilchen in einer Menge von 5 - 30 % enthalten. Das Vorhandensein von solchen Metallteilchen beschleunigt wesentlich die Hauptreaktion zwischen dem Kohlenstoff und dem festen Oxidationsmittel, die im OKM während seiner Erhitzung und Schmelzung verläuft. Die Anwesenheit von Metallteilchen im OKM erhöht den Eisenreduktionsgrad aus Eisenoxiden mit Hilfe von Kohlenstoff und die Geschwindigkeit dieses Vorgangs.

Bei einem relativ niedrigen Anteil (unter 5 %) dieser Metallteilchen im OKM lässt ihr positiver Einfluss auf den Ablauf der genannten Hauptreaktion nach. Die positiven Ergebnisse lohnen sich dabei nicht durch das kompliziertere Verfahren der Herstellung von stückiggemachten Materialien. Die Erhöhung des Metallteilchen-Anteils im OKM (über 30 %) hängt mit der beachtlichen Zunahme von Bindemittelverbrauch zusammen, weil die Festigkeit der OKM-Stücke kleiner wird. Darüber hinaus bereitet diese Maßnahme gewisse verfahrenstechnische Schwierigkeiten, die auf die Agglomeration des OKM zurückzuführen sind. Somit ergibt sich die Kenngröße zwischen 5 und 30 % als optimal.

Das OKM kann Schlackenbildner in einer Menge von 0,1 - 10,0 % enthalten. Die Ergänzung des OKM durch diese Komponente sorgt dafür, dass die flüssige Schlacke beim Aufschmelzen des OKM früher entsteht. Die Versuche haben gezeigt, dass diese Lösung die Brennstabilität der Lichtbögen erhöht und ihren Energieverlust vermindert. Darüber hinaus verbessert die schnelle Schlackenbildung die Bedingungen für den Phosphorentzug nach Abschluss der Schmelzphase. Ein Schlackenbildneranteil unter 0,1 % ist unerwünscht, denn dabei lässt der positive Einfluss nach. Der Schlackenbildneranteil über 10,0 % ist ebenfalls unerwünscht, denn das bedeutet die Verminderung der relativen Anteile der Hauptkomponenten des OKM: Kohlenstoff und Eisenoxide. Folglich erweist sich der Bereich von 0,1 - 10,0 % als optimal.

Die bestehenden Lichtbogenöfen haben nur eine Öffnung im Deckel des Ofens für die Zugabe von schüttbaren Stoffen im Zuge des Schmelzprozesses. Dies kann für die modernen Lichtbogenöfen, die viel größere während des Schmelzbetriebs eingebrachte Materialmengen verkraften können, nicht ausreichend sein. Dazu kommt auch noch, dass die Neigung zur kontinuierlichen Verminderung der Schüttdichte beim Schrott dazu führt, dass der gesamte Ofenraum bis zum Deckel 7 gefüllt wird. Natürlich gibt es dadurch viel weniger Lücken im Eisensatz. Die Einbringung des OKM am Schmelzbeginn wird erschwert, wodurch auch der OKM-Verbrauch begrenzt wird. Die Lösung des Problems wäre eine Kapazitätserweiterung, indem mehr Öffnungen vorgesehen werden. Die Öffnungen hierfür werden nämlich in den Wandungen 2 des Ofengefäßes 3 im Umfang beabstandet ausgebildet. Dabei handelt es sich um mindestens drei Öffnungen, d. h. ihre Zahl ist das Vielfache der Elektrodenzahl. Diese Öffnungen liegen dabei vorteilhaft jeweils zwischen zwei jeweiligen Nachbarelektroden 5 und 0,2 bis 1,0 m tiefer als die Höchststandmarke 10 des Ofengefäßes 3. Diese Lösung erlaubt es, das OKM ab Schmelzbeginn bei einer beliebigen Schrott-Schüttdichte einzubringen und den OKM-Verbrauch in einem großen Bereich stufenlos zu regeln. Dabei wird vermieden, dass die eingebrachten OKM-Briketts die Elektroden 5 beschädigen. Die OKM-Briketts treffen genau in die Mittelzone 9 des Ofens. Somit werden eine gleichmäßige Verteilung und das Durchschmelzen der Stoffe sichergestellt, ohne dass Mengen von gesammelten ungeschmolzenen OKM entstehen.

Das Verfahren zur Stahlerzeugung in einem Elektrolichtbogenofen wird wie folgt durchgeführt:
Nach Abstichende und Ablassen der Schlacke aus dem Elektrolichtbogenofen wird sein Nutzraum ausgeflickt, um den Ofen in den Ausgangszustand zu bringen. Der Ofen wird mit dem ersten Kübel, dem Schrott und dem stückiggemachten (brikettierten) Oxid-Kohlenstoff-Material beschickt. Beim Oxid-Kohlenstoff-Material handelt es sich um 5 bis 80 mm große Stücke, die unter Einsatz von 1 bis 10 % Portlandzement als Bindemittel, z. B. nach dem Rüttelpressungsverfahren, erstellt sind. Der benötigte OKM-Anteil beträgt dabei 10 bis 90 % der gesamten Verbrauchsmenge pro Schmelze. Die Stromversorgung wird eingeschaltet. Gleichzeitig wird auch die Zufuhr von Brennstoff, gasförmigem Sauerstoff und Pulvern aktiviert. Das Einsatzgut beginnt zu schmelzen. Parallel und gleichzeitig mit dem Schmelzbeginn wird das OKM in den Nutzraum des Ofens durch eine Reihe von Öffnungen 8 in den Wandungen 2 des Ofengefäßes 3 eingebracht. Die Zugabe des Oxid-Kohlenstoff-Materials erfolgt mit einer spezifischen Einbringungsrate zwischen 0,5 und 10 kg/Min. pro 1 MVA der Transformatornennleistung. Diese Stücke füllen einige im Schrott vorhandene Lücken aus. Der zurzeit verwendete Schrott hat eine niedrige Schüttdichte von ca. 0,5 t/m³. Deswegen entfallen mehr als 90% des Schrottumfangs auf die Lücken. Das heißt, die Hohlräume dominieren im Gesamtumfang des Einsatzguts. Das Vorhandensein von Hohlräumen in der Schicht des Ausgangseisensatzes sorgt für eine wirksame Aufnahme des eingebrachten Oxid-Kohlenstoff-Materials im Umfang des Eisensatzes.

Bei einer hohen Schüttdichte des Schrotts soll die Einbringung von Oxid-Kohlenstoff-Material vorteilhaft 1 bis 2 Minuten nach dem Schmelzbeginn anfangen. In diesem Fall wird ein Teil des festen Einsatzguts bereits aufgeschmolzen sein, so dass ein Teil des Ofennutzraums frei wird und zusätzliche Lückstellen zwischen der Oberfläche des Eisensatzes und dem Deckel 7 des Ofens entstehen.

Der Anstellwinkel bei der Zugabe der durch die Öffnungen 8 in den Wandungen 2 des Ofengefäßes 3 eingebrachten OKM in Kombination mit den Korngrößen der OKM-Stücke erleichtern ihren Eintritt in die Mittelzone 9, deren Teil zugleich die Lichtbogenzone ist. Ihre Größe beträgt dabei max. D=(d_{Tk}+3,5 d_{El}). Das macht mehr als 30 % der Querschnittsfläche des Ofennutzraums aus. Dadurch wird gewährleistet, dass das Oxid-Kohlenstoff-Material genau die Mittelzone 9 trifft, die unter den erhitzten Lichtbögen liegt und seitlich durch die "Wände" des ungeschmolzenen Einsatzguts begrenzt ist.

Die Verbrauchsrate der eingebrachten Stoffe wird dabei aus einem Bereich von 0,5 - 10,0 kg/Min. pro 1 MVA Transformatorleistung aufgrund der Bedingung gewählt, dass eine gewisse Einbringungsrate aufrechterhalten ist, die der OKM-Fließgeschwindigkeit entspricht oder etwas kleiner ist, was durch die Menge der eingeleiteten elektrischen Energie festgelegt ist. Der Materialverbrauch wird allmählich vergrößert. Das geschieht im Zuge der Durchschmelzung des Einsatzguts, wenn in der Eisensatzschicht Lückstellen (Hohlräume), die sog. "Brunnen", entstehen und wenn unter den Elektroden 5 eine einheitliche Schmelzzone gebildet wird.

Nach Abschluss der ersten Schmelzphase, dem Aufschmelzen eines Teils des ersten Kübels, was 50 bis 65 % des Eisensatzes ausmacht, wird der Ofen ausgeschaltet. Die Zugabe des Oxid-Kohlenstoff-Materials hört auf. Danach erfolgt die Beschickung (Nachbeschickung) mit dem zweiten Schrottkübel. Die Stromversorgung wird wieder eingeschaltet und die Einbringung des Oxid-Kohlenstoff-Materials gestartet. Die Zugabe des OKM wird abgebrochen, nachdem die Wandungen 2 des Ofens vom festen Einsatzgut frei werden, das die Zustellung des Ofens gegen Lichtbögen schützt bzw. abschirmt, und nachdem das fest-flüssige Metallbad mit den darin getauchten Schrottstücken gebildet ist. Das entspricht der abschließenden Schmelzphase, die bei einem flachen Metallbadspiegel verläuft, wenn die Lichtbögen die Wandungen 2 und den Deckel 7 des Ofens direkt bestrahlen. Danach wird der Schmelzprozess nach dem Standardverfahren fortgesetzt, das den bekannten Verfahren ähnlich ist.

Am Schmelzbeginn beruht die Zugabe von OKM-Sätzen in das Einsatzgut darauf, dass es zahlreiche Hohlräume enthält, die den überwiegenden Teil des Einsatzgutumfangs und des gesamten Nutzraums des Elektrolichtbogenofens ausmachen. Das weitere Aufschmelzen des festen Ausgangs-Einsatzguts, dessen Grundkörper der Schrott mit einer relativ niedrigen Schüttdichte zwischen 0,4 und 0,6 t/m³ ist, wird von der Bildung von neuen Hohlräumen in der Eisensatzschicht begleitet: Das sind die bereits erwähnten "Brunnen". Dabei handelt es sich um Hohlräume, die den gesamten Körper des Metalleinsatzguts vom Deckel 7 bis zum Herd 1 durchdringen. Ihrer Geometrie nach sind sie einem Zylinder ähnlich, dessen Wandungen aus stückigen Stoffen bestehen, die das ursprüngliche Metalleinsatzgut bilden. Die "Brunnen" entstehen dadurch, dass das feste, unter den Elektroden 5 und seitlich davon liegende Einsatzgut allmählich flüssig wird und dass die gebildete Schmelze in den unteren Teil des Ofens bis zum Herd 1 abfließt. Dadurch wird der Nutzraum von den Einzelstücken des Einsatzguts freigesetzt, so dass im Eisensatzumfang Hohlräume (Lücken) entstehen, die keine festen Stoffe enthalten. Das vereinfacht die Einbringung des OKM in den Nutzraum und ermöglicht es, den OKM-Verbrauch zu erhöhen.

Nachdem die Elektroden 5 den gesamten Kern des Ausgangs-Eisensatzes durchdrungen und die untere Endstellung erreicht haben und nachdem die Lichtbögen in den Betriebszustand für das fest-flüssige Metallbad gewechselt haben, das sich auf dem Ofenherd 1 befindet, beginnt das Aufschmelzen der Einsatzgutstücke, die die Seitenwände der "Brunnen" bilden. Die zuerst gebildeten Hohlräume im Umfang des Eisensatzes werden erweitert.

Die geringe Schüttdichte von Schrott bestimmt den relativ kleinen Durchmesser der "Brunnen" zum Zeitpunkt ihrer Ausbildung vor. Er beträgt dabei ca. d_{B} = 1,5d_{El}. Die Zugabe bzw. das Vorhandensein von OKM-Stücken in der Schicht des Metalleinsatzguts vergrößert das Durchmesserverhältnis zwischen den "Brunnen" und den Elektroden. Erreicht der relative "Brunnen"-Durchmesser d_{B}/d_{El.}=2 und mehr, so schließen sich die gebildeten "Brunnen" zu einer einheitlichen Schmelzzone zusammen, die in der Mittelzone 9 des Ofens unter den Elektroden 5 liegt. Seitlich ist diese Zone durch noch ungeschmolzene Einsatzgutstücke gebildet, die sich ihrerseits auf die Wandungen 2 des Ofengefäßes 3 stützen.

Infolge des teilweisen Aufschmelzens des festen Einsatzguts, das unter den Elektroden 5 liegt, wird ein Teil des Nutzraums vom Schrott frei. Das erleichtert wesentlich die Bedingungen für die Zugabe von OKM und ermöglicht es, ihre Einbringungsgeschwindigkeit zu erhöhen. Darüber hinaus wird dadurch gewährleistet, dass das OKM die Oberfläche des flüssigen Metallbads trifft, eingebracht und vorteilhaft auf der Oberfläche des während des Schmelzprozesses gebildeten Metallbads verteilt wird.

Nach der Beschickung des Ofens mit dem zweiten Kübel gelangen die OKM-Stücke einwärts des Eisensatzumfangs und erreichen ungefähr den Mittelpunkt des Ofennutzraums, der dazu auf dem Verfahrweg der Elektroden 5 liegt. Das schafft die benötigten und ausreichenden Bedingungen, um das Potential des OKM sowohl hinsichtlich der Reaktion zwischen Kohlenstoff und Sauerstoff aus dem festen Oxidationsmittel, das in diesem Material enthalten ist, als auch hinsichtlich des Nachbrennens von CO zu CO₂ und der Aufnahme dieser Wärme durch die schmelzenden Stoffe und das Metallbad wirksam auszunutzen. Gleichzeitig damit wird die Aufkohlung des Metallbads beschleunigt. Das beschleunigt seinerseits die Schmelzphase und vermindert den Stromaufwand.

Somit verändert die Einbringung eines Teils der OKM-Briketts während des Schmelzbetriebs wesentlich das Schmelzverfahren zum Besseren und erhöht die Wirksamkeit der Anwendung.

Das Verhältnis zwischen Kohlenstoff und Sauerstoff, der durch Eisenoxide im festen Oxidationsmittel eingeleitet wird, wird innerhalb von 0,15≤ C/O ≤ 5,00 gewählt oder aufrechterhalten. Die Wirksamkeit des vorgeschlagenen Verfahrens steigt, wenn die OKM-Zusammensetzung durch eisenhaltige Metallteilchen in einer Menge von 5 - 30 % ergänzt wird. Das Vorhandensein von metallischem Eisen vermindert die Anfangstemperatur der Reaktion zwischen Kohlenstoff und Eisenoxiden und beschleunigt den Verlauf dieser Reaktion. Das erhöht seinerseits den Eisenreduktionsgrad und beschleunigt die Bildung von Kohlenstoffmonoxid. Die frühere Entwicklung dieses Gases verbessert die Bedingungen des Nachbrennens und der Wärmeübertragung an die schmelzenden Stoffe des Eisensatzes und verlängert die Wärmetauschdauer zwischen dem Einsatzgut und der Wärme, die während des Nachbrennens von CO zu CO₂ entwickelt wird.

Die Wirksamkeit des vorgeschlagenen Verfahrens wird auch dadurch erhöht, dass die OKM-Zusammensetzung zusätzlich durch Schlackenbildner, nämlich Oxide und/oder Fluoride der chemischen Elemente, die eine höhere Affinität zu Sauerstoff bei einer Temperatur von über 1550° C haben als Eisen, in einer Menge von 0,1 bis 10,0 % der Gesamtmasse des Materials ergänzt werden.

Aufgrund der Nutzung der Gruppe von Erfindungen wurden das Verfahren zur Stahlerzeugung und der Elektrolichtbogenofen dafür entwickelt. Dadurch wurde es möglich, den spezifischen elektrischen Stromverbrauch für das Aufschmelzen des Metalleinsatzguts wesentlich zu vermindern und die Eisenausbeute aus dem Oxid-Kohlenstoff-Material zu vergrößern und seine relative Menge in der Gesamtmasse des Einsatzguts zu erhöhen.

## Patentansprüche

1. Verfahren zur Stahlerzeugung in einem Elektrolichtbogenofen mit Einbringung des Einsatzguts in den Nutzraum des Ofens, wobei das Einsatzgut sich aus Schrott und stückiggemachtem Oxid-Kohlenstoff-Material zusammensetzt, mit Zufuhr von Brennstoff, Aufkohlmittel, Pulver und gasförmigem Sauerstoff, mit Zufuhr von elektrischem Strom, Erhitzung und Schmelzen des Einsatzguts mit Hilfe von Lichtbögen einschließlich der Entkohlung des Metallbads, mit Abgießen des Metalls und Ablassen der Schlacke aus dem Ofen,
**dadurch gekennzeichnet,**
**dass** ein Teil des Oxid-Kohlenstoff-Materials in einer Menge von 10 bis 90 % von seiner verbrauchten Gesamtmenge pro Schmelze samt einem ersten Satz des Metalleinsatzguts einmalig vor Schmelzbeginn in die Mittelzone des Ofens eingebracht wird, die an die Lichtbogenzone angrenzt und auf das Maß D=(d_{Tk}+3,5 d_{El}) begrenzt ist, wobei d_{Tk} der Elektrodenteilkreisdurchmesser und d_{El} der Elektrodendurchmesser sind,
**dass** die Restmenge des Oxid-Kohlenstoff-Materials dem aufgeschmolzenen Einsatzgut im Verlauf des Stahlschmelzprozesses mit einer spezifischen Beschickungsrate von 0,5 -10 kg/Min. pro 1 MVA Nennleistung des Elektrolichtbogenofens zugeführt wird und
**dass** die Korngröße des Oxid-Kohlenstoff-Materials zwischen 5 und 80 mm gewählt wird.

2. Verfahren nach Anspruch 1,
**dadurch gekennzeichnet,**
**dass** das Verhältnis zwischen Kohlenstoff und Sauerstoff, der durch das feste Oxidationsmittel des Oxid-Kohlenstoff-Materials eingebracht und/oder in Eisenoxiden enthalten ist, im Bereich von 0,15≤ C/O ≤ 5,00 bei folgenden Anteilen der Ausgangsstoffe festgelegt wird (in Mass.-%): festes Oxidationsmittel 40 - 95, Aufkohlmittel 5 - 60 und Bindemittel über die 100 % hinaus in einer Menge von 1 bis 10% der Gesamtmasse des Aufkohlmittels und des festen Oxidationsmittels.

3. Verfahren nach Anspruch 1,
**dadurch gekennzeichnet,**
**dass** das Oxid-Kohlenstoff-Material zusätzlich eisenhaltige Metallteilchen in einer Menge von 5 bis 30 % der Gesamtmasse des Materials enthält.

4. Verfahren nach Anspruch 1,
**dadurch gekennzeichnet,**
**dass** das Oxid-Kohlenstoff-Material zusätzlich Schlackenbildner in einer Menge zwischen 0,1 und 10,0 % der Gesamtmasse des Materials enthält,
**dass** als Schlackenbildner dabei Oxide und/oder Fluoride solcher Elemente benutzt werden, die eine höhere Affinität zu Sauerstoff bei einer Temperatur von über 1550° C haben als Eisen, wobei diese Elementengruppe Ca, Na, K, Ba, Al, Ti, Zr, Si, Mn, V, Cr und B einschließt.

5. Elektrolichtbogenofen zur Stahlerzeugung nach dem Verfahren nach einem der Ansprüche 1 bis 4,
mit einem Ofengefäß (3) mit Öffnungen für die Zugabe von schüttbaren Stoffen und einem ausgewölbten abnehmbaren Deckel (7),
wobei das Ofengefäß (3) mit hochfeuerfester Zustellung derart ausgemauert ist, dass ein Herd (1) und Wandungen (2) des Ofengefäßes (3) gebildet sind, und wobei der Deckel (7) mit Elektrodenarmen versehen ist, deren Ausbildung das Nachsetzen und den Wechsel von Elektroden (5) ermöglicht, wobei die Ofengefäßwandungen (2) mit mindestens drei im Umfang beabstandeten Öffnungen (8) versehen sind, die einen Anstellwinkel aufweisen, der ein Einbringen des Oxid-Kohlenstoff-Materials in die Mittelzone (9) des Ofens durch Schütten ermöglicht, wobei die Mittelzone (9) an die Lichtbogenzone angrenzt und auf das Maß D=(d_{Tk}+3,5d_{El}) begrenzt ist,
wobei d_{Tk} der Elektrodenteilkreisdurchmesser und d_{El} der Elektrodendurchmesser sind und wobei diese Öffnungen 0,2 - 1,0 m tiefer als die Höchststandmarke des Ofengefäßes (3) liegen.

6. Elektrolichtbogenofen nach Anspruch 5,
**dadurch gekennzeichnet,**
**dass** die Öffnungen (8) für die Zugabe des Oxid-Kohlenstoff-Materials in die Mittelzone (9) des Ofens im Umfang der Wandungen (2) beabstandet sind, wobei diese Öffnungen (8) jeweils vorteilhaft zwischen zwei jeweiligen Nachbarelektroden (5) angeordnet sind.

## Claims

1. A method for the production of steel in an electric arc furnace with insertion of the feed stock into the useful space of the furnace, wherein the feed stock is comprised of scrap metal and agglomerated oxide-carbon materials, having the supply of fuel, carburizers, powder and gaseous oxygen, having the supply of electrical power, heating and smelting of the feed stock with the help of light arcs including the decarburisation of the metal bath, having casting of the metal and drainage of the slag from the oven,
**characterised**
**in that** a part of the oxide-carbon material is introduced in a quantity of 10 to 90 % of its used total volume per smelting including an initial batch of the metal feed stock as a one-time introduction before the start of smelting into the central zone of the furnace, which adjoins the light arcing zone and is limited to the dimension D=(d_{Tk}+3.5 d_{El}), wherein d_{Tk} is the electrode reference diameter and d_{El} is the electrode diameter,
**in that** the remaining quantity of oxide-carbon material is added to the smelted feed stock during the course of the steel smelting process with a specific feed rate of 0.5 - 10 kg/min per 1 MBA nominal output of the electric arc furnace and that the particle size of the oxide-carbon material is selected between 5 and 80 mm.

2. The method according to claim 1,
**characterised**
**in that** the ratio between the carbon and oxygen, which is introduced by the solid oxidising agent of the oxide-carbon material and/or is contained in iron oxides, is set in the range of 0.15 ≤ C/O ≤ 5.00 with the following proportions of the source materials (in wt.%): solid oxidising agent 40 - 95, carburizer 5 - 60 and binder in excess of the 100% in a quantity of 1 to 10 % of the total mass of carburizer and solid oxidising agent.

3. The method according to claim 1,
**characterised**
**in that** the oxide-carbon material also contains ferrous metal particles in a quantity of 5 to 30 % of the total mass of the material.

4. The method according to claim 1,
**characterised**
**in that** the oxide-carbon material also contains slag formers in a quantity between 0.1 and 10.0 % of the total mass of material,
**in that** oxides and/or fluorides are used as slag formers of such elements having a higher affinity with oxygen at a temperature of over 1550° C than iron, wherein this group of elements includes Ca, Na, K, Ba, Al, Ti, Zr, Si, Mn, V, Cr and B.

5. An electric arc furnace for the production of steel according to the method according to one of claims 1 to 4,
with a furnace vessel (3) with openings for the addition of bulk substances and a curved, replaceable cover (7),
wherein the furnace vessel (3) is lined with highly fireproof lining such that a hearth (1) and claddings (2) of the furnace vessel (3) are formed, and wherein the cover (7) is provided with electrode arms, the design of which permits the readjustment and replacement of electrodes (5), wherein the furnace vessel claddings (2) are provided with at least three circumferentially spaced openings (8) having a setting angle which permits an insertion of the oxide-carbon material into the central zone (9) of the furnace by means of pouring, wherein the central zone (9) adjoins the light arcing zone and is limited to the dimension D=(d_{Tk}+3.5d_{El}),
wherein d_{Tk} is the electrode reference diameter and d_{El} is the electrode diameter and wherein these openings are positioned 0.2 -1.0 m deeper than the highest positional market of the furnace vessel (3).

6. The electric arc furnace according to claim 5,
**characterised**
**in that** the openings (8) for the addition of the oxide-carbon material into the central zone (9) of the furnace are spaced circumferentially on the claddings (2), wherein these openings (8) are each arranged preferentially between two respective neighbouring electrodes (5).

## Revendications

1. Procédé d'élaboration d'acier dans un four à arc électrique comprenant l'introduction de la charge d'alimentation dans un espace utile du four, dans lequel la charge d'alimentation est constitué de ferraille et de matériau de carbone et oxyde aggloméré, avec alimentation de combustible, d'agent de carburation, de poudre et d'oxygène gazeux, avec alimentation de courant électrique, chauffage et fonte de la charge d'alimentation à l'aide d'arcs, y compris décarburation du bain de métal, avec coulée du métal et évacuation des scories du four,
**caractérisé en ce que**
une partie du matériau de carbone et oxyde étant introduit en une quantité de 10 à 90 % de sa quantité totale utilisée par fonte, accompagnée par un premier sel de la charge d'alimentation métallique en une fois avant le début de la fusion dans la zone intermédiaire du four, qui jouxte la zone des arcs et qui est limitée à la dimension D=(d_{Tk}+3,5 d_{El}), dans lequel d_{Tk} représente le diamètre du cercle primitif des électrodes et d_{El} le diamètre des électrodes,
**en ce que** la quantité résiduelle du matériau de carbone et oxyde est ajoutée à la charge d'alimentation fondue pendant le processus de fonte d'acier avec un taux de chargement spécifique de 0,5 -10 kg/Min. par puissance nominale de 1 MVA du four à arc électrique et **en ce que** la dimension granulaire du matériau de carbone et oxyde est choisie entre 5 et 80 mm.

2. Procédé selon la revendication 1,
**caractérisé en ce que**
le rapport entre le carbone et l'oxygène, qui est apporté par l'agent d'oxydation solide du matériau de carbone et oxyde et/ou qui est contenu dans les oxydes de fer, est défini dans la plage de 0,15 ≤ C/O ≤ 5,00 avec les proportions suivantes des matières premières (en % en masse) : agent d'oxydation solide 40 - 95, agent de carburation 5-60 et liant pour atteindre 100 % en une quantité de 1 à 10 % de la masse totale de l'agent de carburation et de l'agent d'oxydation solide.

3. Procédé selon la revendication 1,
**caractérisé en ce que**
le matériau de carbone et oxyde contient en plus des particules métalliques contenant du fer en une quantité de 5 à 30 % de la masse totale du matériau.

4. Procédé selon la revendication 1,
**caractérisé en ce que**
le matériau de carbone et oxyde contient en plus un générateur de laitier en une quantité de 0,1 à 10,0 % de la masse totale du matériau,
**en ce que**, en guise de générateur de laitier, sont utilisés des oxydes et/ou fluorures d'éléments qui présentent une affinité supérieure à l'oxygène à une température supérieure à 1550° C par rapport au fer, ces groupes d'éléments comprenant Ca, Na, K, Ba, Al, Ti, Zr, Si, Mn, V, Cr et B.

5. Four à arc électrique pour l'élaboration d'acier selon le procédé selon une des revendications 1 à 4,
avec une cuve de four (3) avec des ouvertures pour l'ajout de matières pouvant s'écouler et un couvercle (7) amovible courbé,
dans lequel la cuve de four (3) est habillée d'une composition hautement réfractaire de manière à former un foyer (1) et des parois (2) de la cuve de four (3) et dans lequel le couvercle (7) est doté de bras d'électrodes, dont la formation permet l'installation ultérieure et l'échange d'électrodes (5), dans lequel les parois (2) de la cuve du four sont dotées d'au moins trois ouvertures (8) espacées sur la circonférence, qui présentent un angle d'attaque, qui permet une introduction du matériau de carbone et oxyde dans la zone intermédiaire (9) du four par versement, dans lequel la zone intermédiaire (9) est délimitée par la zone d'arc lumineux et limitée à la dimension D=(d_{Tk}+3,5d_{El}),
dans lequel d_{Tk} représente le diamètre du cercle primitif des électrodes et d_{El} le diamètre des électrodes et dans lequel ces ouvertures se trouvent à 0,2 -1,0 m plus profond que le repère de niveau maximum de la cuve de four (3).

6. Four à arc électrique selon la revendication 5,
**caractérisé en ce que**
les ouvertures (8) pour l'ajout du matériau de carbone et oxyde dans la zone intermédiaire (9) du four sont espacées sur la circonférence des parois (2), dans lequel ces ouvertures (8) sont disposées respectivement de préférence entre deux électrodes voisines (5) respectives.
